# EUROPEAN PATENT APPLICATION

(11) **EP 4 832 441 A1**
(43) Date of publication of application: **28.10.2026**
(21) Application number: 25741499.5
(22) Date of filing: 14.01.2025
(51) Int. Cl.: H04L 41/16

(54) **INTENT MANAGEMENT METHOD AND DEVICE**

(30) Priority: 18.01.2024 CN 202410074882
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: Goddar, Heinz J.
(86) International application number: PCT/CN2025/072343
(87) International publication number: WO 2025/152938

(57) **Abstract**

This application relates to the field of communication technologies, and in particular, to an intent management method and an apparatus, to effectively ensure implementation of an intent target and improve operation and maintenance efficiency of a communication network. The method includes: receiving intent preference information from a second communication apparatus, where the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and executing a first intent based on the intent preference information, where the first intent includes a first intent target, and the first intent target is to be preferentially fulfilled, where the first intent target is the intent target associated with the intent target type, and/or the first intent target is the intent target associated with the intent object.

## Description

### CROSS-REFERENCE TO RELATED APPLICATIONS

This application claims priority to Chinese Patent Application No. 202410074882.X, filed with the China National Intellectual Property Administration on January 18, 2024 and entitled "INTENT MANAGEMENT METHOD AND APPARATUS", which is incorporated herein by reference in its entirety.

### TECHNICAL FIELD

This application relates to the field of communication technologies, and in particular, to an intent management method and an apparatus.

### BACKGROUND

5G-advanced (5G-advanced, 5G-A) networks, which are the evolution of 5th generation (5th generation, 5G) mobile communication technologies, bring more operational complexities due to a large number of access devices and diversity of services. Network automation and intelligence are one of the important topics for the 5G-A networks. Automation and intelligence technologies (for example, artificial intelligence, machine learning, and big data analysis) may be applied to a plurality of scenarios of the network lifecycle, including network planning, network deployment, network optimization, service operation, and the like. These technologies can reduce manual operations, reduce operating expense (operating expense, OPEX) of operators, improve operation and maintenance efficiency, improve service experience, and enable various vertical industries (for example, autonomous driving and smart city).

Intents may be used to describe networks or services expected by users. The intents do not define specific network or service configuration parameters, nor do they prescribe management tasks that need to be executed by an intent management system. Intents allow users to request networks and services without detailed knowledge of how the networks and services are to be provided. The intent management system may automatically learn the behavior of networks and services and use intelligence and automation mechanisms to meet user requirements expressed via the intents.

The intent management system may receive intents from one or more users, and each intent may include one or more intent targets (for example, network or service requirements). In consideration of limited resources of a communication network (for example, the 5G-A network or a subnetwork of the 5G-A network), how to effectively ensure implementation of the intent target and improve operation and maintenance efficiency of the communication network by the intent management system is a problem that deserves attention.

### SUMMARY

Embodiments of this application provide an intent management method and an apparatus, to effectively ensure implementation of an intent target and improve operation and maintenance efficiency of a communication network.

According to a first aspect, an embodiment of this application provides an intent management method. The method may be performed by a first communication apparatus. The first communication apparatus herein may be a device (a functional unit, a management platform, or the like) having an intent management function in a communication network (for example, a 5G-A network or a subnetwork of a 5G-A network), or may be a processor, a module, a chip, a chip system, or the like that implements the method in a device having an intent management function. The method includes: receiving intent preference information from a second communication apparatus, where the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and executing a first intent based on the intent preference information, where the first intent includes a first intent target, and the first intent target is to be preferentially fulfilled, where the first intent target is the intent target associated with the intent target type, and/or the first intent target is the intent target associated with the intent object.

In this embodiment of this application, that the intent target is to be preferentially fulfilled may mean that the intent target is to be preferentially implemented, the intent target is to be preferentially executed, a resource is to be preferentially allocated to the intent target, or the like. For example, there is an intent target 1 and an intent target 2, and the intent target 1 is an intent target that is to be preferentially implemented. If the communication network cannot fulfill both the intent target 1 and the intent target 2, the first communication apparatus may execute the intent target 1, for example, control a parameter (or a configuration) of the device in the communication network by using automation and intelligence technologies, so that the communication network fulfills the intent target 1. For the intent target 2, the first communication apparatus may control the communication network to fulfill the intent target 2 as much as possible when the intent target 1 is fulfilled, or may not execute the intent target 2. For another example, there is an intent target 1 and an intent target 3, and the intent target 1 is an intent target that is to be preferentially implemented. If the communication network further has an additional available resource in addition to resources (for example, bandwidth resources) that can support the intent target 1 and the intent target 3, when executing the intent target 1, the first communication apparatus may also control the communication network to allocate more available resources to implement the intent target 1 in addition to the resources that can support implementation of the intent target 1, so that an implementation effect of intent target 1 is better.

According to the foregoing method, the first communication apparatus may identify (or distinguish) a preferred intent target based on the intent preference information, and preferentially fulfill the preferred intent target, so that when there are a plurality of intent targets, the first communication apparatus can resolve an intent target conflict or allocate resources to the plurality of intent targets based on the intent preference information, to effectively ensure implementation of the intent targets. This can avoid intent execution interruption caused by an intent conflict, which affects an intent execution process, and can also improve operation and maintenance efficiency of the communication network.

In a possible design, before the executing the first intent based on the intent preference information, the method further includes: determining that an intent conflict exists in the first intent, where the intent conflict existing in the first intent includes that the first intent target conflicts with a second intent target further included in the first intent, and/or the first intent target conflicts with a third intent target included in a second intent.

According to the foregoing design, the intent management method provided in this embodiment of this application may be applied to an intent conflict scenario, to resolve an intent conflict and prevent an intent execution process from being affected by the intent conflict.

In a possible design, before the executing the first intent based on the intent preference information, the method further includes: determining that the first intent further includes the second intent target, where the second intent target does not conflict with the first intent target; or determining that the second intent further exists, where the second intent further includes the third intent target, and the third intent target does not conflict with the first intent target.

According to the foregoing design, the intent management method provided in this embodiment of this application may be applied to a scenario in which a plurality of intent targets need to be executed, so that more resources can be allocated to a preferred intent target, to effectively ensure an implementation effect of the preferred intent target.

In a possible design, the intent preference information includes radio network intent preference information and/or radio service intent preference information, and the first intent is a radio network intent or a radio service intent.

According to the foregoing design, intent preference information may be configured for a radio network and/or a radio service, to effectively ensure implementation of a radio network intent target and/or a radio service intent target, and improve operation and maintenance efficiency of the communication network (for example, the radio network).

In a possible design, the radio network intent preference information may include one or more of a preference for a radio network intent target type (for example, a coverage target, a rate target, a capacity target, or an energy saving target), a preference for a radio network standard (for example, an evolved universal terrestrial radio access network (evolved universal terrestrial radio access network, E-UTRAN) or new radio (new radio, NR)), a preference for a radio frequency (for example, 200 megahertz (MHz), 300 MHz, or 700 MHz), or a preference for a user group.

According to the foregoing design, an intent preference may be set from aspects such as the radio network intent target type, the radio network standard, the radio frequency, or the user group, to preferentially ensure implementation of an intent target from one or more aspects of the radio network.

In a possible design, the radio service intent preference information may include a preference for a radio service intent target type (for example, a latency target, a rate target, or a capacity target), a preference for a radio service type (for example, enhanced mobile broadband (enhanced mobile broadband, eMBB), ultra-reliable low-latency communication (ultra-reliable low-latency communication, URLLC), massive machine type communications (massive machine type communications, MIoT), vehicle to everything (vehicle to X, V2X)), a preference for a radio service application type (for example, voice or video), a preference for a radio service user type (for example, a VIP (very important person, VIP) user, a common user, a roaming user, or a high-priority user), or a preference for a radio service tenant type (for example, a power grid user, a government and enterprise user, a steel mill user, or a vehicle user).

According to the foregoing design, an intent preference may be set from aspects such as the radio service intent target type, the radio service type, the radio service application type, the radio service user type, or the radio service tenant type, to preferentially ensure implementation of an intent target from one or more aspects of the radio service.

In a possible design, the method further includes: receiving condition information from the second communication apparatus, where the condition information indicates an application condition of the intent preference information, and the executing the first intent based on the intent preference information meets the application condition.

For example, the condition information may include a time range to which the intent preference information is applicable.

According to the foregoing design, a use condition may be set for the intent preference information, and different intent preference information can be used under different conditions, to meet application requirements of a user (for example, an operator) for the communication network under different conditions.

In a possible design, the method further includes: receiving an intent execution management function object identifier from the second communication apparatus, where the intent execution management function object identifier identifies an intent execution management function object; and configuring the intent preference information in the intent execution management function object. Optionally, the first intent is an intent managed by the intent execution management function object. The first communication apparatus may include at least one intent execution management function object. Different intent execution management function objects may be responsible for managing different intents, for example, managing intents of different areas and intents of different types.

According to the foregoing design, the intent preference information can be configured for a specific intent execution management function object, and the intent preference information can be configured at an intent execution management function object granularity.

In a possible design, the intent preference information, the condition information, and the intent execution management function object identifier are included in one message.

In a possible design, the method further includes: receiving a first intent identifier from the second communication apparatus, where the first intent identifier identifies the first intent; and configuring the intent preference information in an intent management object corresponding to the first intent.

According to the foregoing design, the intent preference information can be configured for a specific intent, and the intent preference information can be configured at an intent granularity.

In a possible design, the intent preference information, the condition information, and the first intent identifier are included in one message.

In a possible design, the first intent further includes the second intent target, and the second intent target conflicts with the first intent target. The method further includes: sending an intent conflict report to the second communication apparatus, where the intent conflict report includes a modification recommendation for the second intent target.

According to the foregoing design, when a conflict exists in an intent target, a modification recommendation for the intent target that fails to be fulfilled is further provided, to provide, on a second communication apparatus side, a reference for modification for the intent target that fails to be fulfilled.

According to a second aspect, an embodiment of this application provides an intent management method. The method may be performed by a second communication apparatus. The second communication apparatus herein may be a device (a functional unit, a management platform, or the like) having an intent management function in a communication network, or may be a processor, a module, a chip, a chip system, or the like that implements the method in a device having an intent management function. The method includes: determining intent preference information, where the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and sending the intent preference information to a first communication apparatus.

In a possible design, the intent preference information includes radio network intent preference information and/or radio service intent preference information.

In a possible design, the radio network intent preference information includes one or more of the following: a radio network intent target type preference, a radio network standard preference, a radio frequency preference, or a user group preference.

In a possible design, the radio service intent preference information includes one or more of the following: a radio service intent target type preference, a radio service type preference, a radio service application type preference, a radio service user type preference, or a radio service tenant type preference.

In a possible design, the method further includes: sending condition information to the first communication apparatus, where the condition information indicates an application condition of the intent preference information.

For example, the condition information may include a time range to which the intent preference information is applicable.

In a possible design, the method further includes: sending an intent execution management function object identifier to the first communication apparatus, where the intent execution management function object identifier identifies an intent execution management function object, and the intent preference information is configured in the intent execution management function object.

In a possible design, the intent preference information, the condition information, and the intent execution management function object identifier are included in one message.

In a possible design, the method further includes: sending a first intent identifier to the first communication apparatus, where the first intent identifier identifies a first intent, and the intent preference information is configured in an intent management object corresponding to the first intent.

In a possible design, the intent preference information, the condition information, and the first intent identifier are included in one message.

In a possible design, the method further includes: receiving an intent conflict report from the first communication apparatus, where the intent conflict report includes a modification recommendation for a second intent target in a first intent, the first intent includes a first intent target and the second intent target, the second intent target conflicts with the first intent target, and the first intent target is to be preferentially fulfilled based on the intent preference information; and modifying the second intent target based on the intent conflict report.

According to a third aspect, an embodiment of this application provides a communication apparatus. The apparatus has a function of implementing the method according to the first aspect or the second aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to the first aspect or the second aspect.

According to a fourth aspect, an embodiment of this application provides a communication apparatus. The communication apparatus includes an interface circuit and a processor, and the processor and the interface circuit are coupled to each other. The processor is configured to implement the method according to the first aspect or the second aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to store instructions executed by the processor, or store input data required by the processor to execute the instructions, or store data generated after the processor executes the instructions. The memory may be a physically independent unit, or may be coupled to the processor, or the processor includes the memory (that is, the processor and the memory are integrated).

In a possible implementation, the communication apparatus is a chip.

According to a fifth aspect, an embodiment of this application provides a communication system. The communication system includes a first communication apparatus and a second communication apparatus. The first communication apparatus may implement the method according to the first aspect, and the second communication apparatus may implement the method according to the second aspect.

According to a sixth aspect, an embodiment of this application provides a computer-readable storage medium. The computer-readable storage medium stores a computer program or instructions. When the computer program or the instructions are executed by a processor, the method according to the first aspect or the second aspect may be implemented.

According to a seventh aspect, an embodiment of this application further provides a computer program product, including a computer program or instructions. When the computer program or the instructions are executed by a processor, the method according to the first aspect or the second aspect may be implemented.

According to an eighth aspect, an embodiment of this application further provides a chip system. The chip system includes a processor and an interface. The processor is configured to invoke and execute instructions from the interface. When the processor executes the instructions, the method according to the first aspect or the second aspect may be implemented.

For technical effects that can be achieved in the second aspect to the eighth aspect, refer to technical effects that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a first diagram of an intent management method according to an embodiment of this application;
FIG. 4 is a second diagram of an intent management method according to an embodiment of this application;
FIG. 5 is a third diagram of an intent management method according to an embodiment of this application;
FIG. 6 is a first diagram of a structure of a communication apparatus according to an embodiment of this application; and
FIG. 7 is a second diagram of a structure of a communication apparatus according to an embodiment of this application.

### DESCRIPTION OF EMBODIMENTS

The following describes technical solutions in embodiments of this application with reference to accompanying drawings in embodiments of this application. Embodiments of this application may be applied to various communication networks, for example, a 5G communication network (which may also be referred to as an NR network), a 5G-A network, a long term evolution (long term evolution, LTE) network, an advanced long term evolution (advanced long term evolution, LTE-A) network, and a future communication network (for example, a 6G communication network). This is not limited herein. For ease of understanding, the following explains and describes some terms in embodiments of this application.
(1) An intent (intent) may be used to describe expectations for a communication network, and may include requirements, targets, conditions, and constraints for the communication network, without specifying how to achieve the expectations. The communication network determines a solution to be used to fulfill the intent.
   The intent may include one or more intent targets. The intent target is a target expected to be achieved in the intent, for example, a high-load ratio in an area 1 being less than 10%. For example, the intent may include a capacity intent (where for example, the capacity intent requires the high-load ratio in the area 1 to be less than 10%), a coverage intent (where for example, the coverage intent requires a weak coverage ratio in the area 1 to be less than 20%), a rate intent (where for example, the rate intent requires a low-rate user ratio in the area 1 to be less than 5%), and the like.
(2) Intent management system (intent-driven management system): The intent management system may be understood as a system that uses intents for management and control of closed-loop automation. The intent management system may translate the intents into policies and management tasks, which can be executed by the intent-driven intent management system to implement the closed-loop automation. In an intent-driven intent management method, the intents may drive the intent management system to use various types of closed-loop automation to fulfill the intents. The intent management system may also be referred to as an intent handling function (intent handling function). The intent management system may be an operation management system or a supported function of a communication network.
(3) A managed object (managed object) is used to describe information about a managed object or a management task in a management system (for example, an intent management system). A managed object information model may be used as an interaction parameter in a management interface. Creating a managed object indicates creating management information in the management system, so that the management system can manage the managed object or execute the management task based on the management information. In embodiments of this application, an intent may be considered as a managed object in the management system, and the intent may also be referred to as an intent management object, that is, a management object of the intent.
(4) Intent report (intent report): The intent report is intent result information fed back to a user, and may include one or more of intent execution result information, an intent feasibility check report, intent conflict information, and the like.

In addition, it should be understood that the terms "system" and "network" in embodiments of this application may be used interchangeably. Unless otherwise specified, ordinal numbers such as "first" and "second" mentioned in embodiments of this application are used to distinguish a plurality of objects, and are not used to limit a sequence, a time sequence, a priority, or an importance of the plurality of objects. For example, a first intent target and a second intent target do not indicate different priorities, importance degrees, or the like corresponding to the two intent targets.

In embodiments of this application, unless otherwise specified, a number of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c represents: a, b, c, a and b, a and c, b and c, or a, b, and c, where a, b, and c may be singular or plural.

In addition, the terms "include" and "have" in embodiments of this application, claims, and accompanying drawings are not exclusive. For example, a process, a method, a system, a product, or a device that includes a series of steps or modules is not limited to the listed steps or modules, and may further include steps or modules that are not listed.

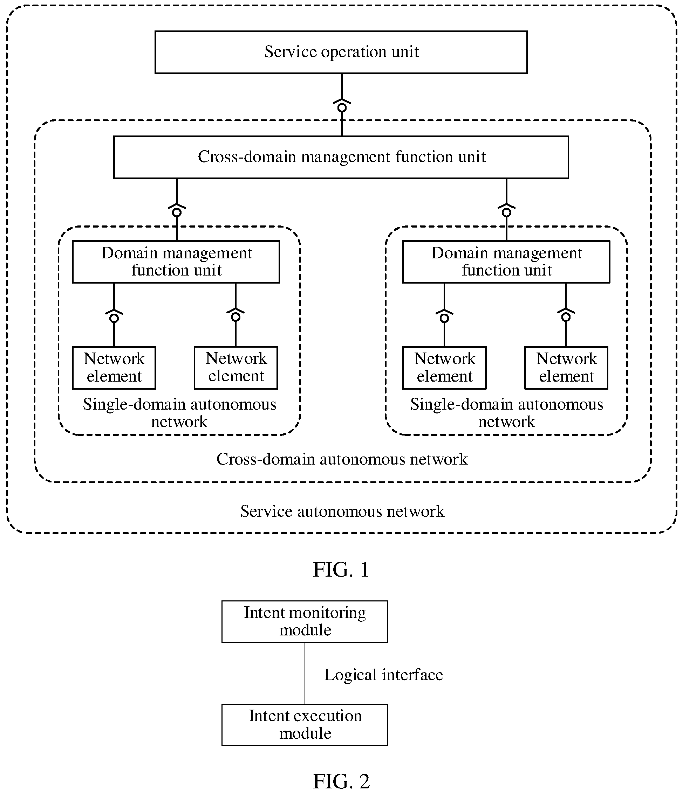

FIG. 1 is a diagram of an autonomous network system architecture according to an embodiment of this application. The system architecture may also be referred to as a network management system architecture or the like. The system architecture includes a service operation unit, a cross-domain management function unit, a domain management function unit, and a plurality of network elements.

One service operation unit may manage one or more cross-domain management function units. One cross-domain management function unit may manage one or more domain management function units. One domain management function unit may manage one or more network elements. The following briefly describes the units.

### (1) Service operation unit

The service operation unit may also be referred to as a communication service management function (communication service management function, CSMF) unit, and may be configured to provide functions and management services such as charging, settlement, accounting, customer service, business, network monitoring, communication service lifecycle management, and service intent translation. The service operation unit may include an operating system of an operator or a vertical operational technology system (vertical operational technology system).

### (2) Cross-domain management function unit

The cross-domain management function unit may also be referred to as a network management function (network management function, NMF) unit. The cross-domain management function unit may provide one or more of the following functions or management services: network lifecycle management, network deployment, network fault management, network performance management, network configuration management, network guarantee, a network optimization function, translation of a network intent from a communication service provider (intent from communication service provider, intent-CSP), translation of a network intent from a communication service consumer (intent from communication service consumer, intent-CSC), and the like. The network herein may include one or more network elements, subnetworks, or network slices. For example, the cross-domain management function unit may be a network slice management function (network slice management function, NSMF), a management data analytic function (management data analytic function, MDAF), a cross domain self-organization network function (self-organization network function, SON-function), or a cross domain intent management function unit.

In some deployment scenarios, the cross-domain management function unit may also provide one or more of the following management functions or management services: subnetwork lifecycle management, subnetwork deployment, subnetwork fault management, subnetwork performance management, subnetwork configuration management, subnetwork guarantee, a subnetwork optimization function, translation of a subnetwork intent from a communication service provider, translation of a subnetwork intent from a communication service consumer, and the like. The subnetwork may include a plurality of small subnetworks or a plurality of network slice subnetworks. For example, a subnetwork of an access network of an operator includes a subnetwork of an access network of a vendor 1 and a subnetwork of an access network of a vendor 2.

It may be understood that, in implementation, the cross-domain management function unit may be implemented by one management platform and a plurality of management applications, where the management applications implement management functions of the one or more networks or subnetworks. Certainly, a network element in a network may alternatively have a function of the cross-domain management function unit.

### (3) Domain management function unit

The domain management function unit, also referred to as a subnetwork management function (subnetwork management function, NMF) or a network element management function (network element management function) unit, may provide one or more of the following functions or management services: subnetwork or network element lifecycle management, subnetwork or network element deployment, subnetwork or network element fault management, subnetwork or network element performance management, subnetwork or network element guarantee, subnetwork or network element optimization management, translation of a subnetwork or network element intent, and the like. The subnetwork herein may include one or more network elements. Alternatively, the subnetwork herein may include one or more subnetworks, in other words, the one or more subnetworks form a subnetwork with a larger coverage area. Alternatively, the subnetwork herein may include one or more network slice subnetworks. The subnetwork may be described in at least one of the following manners:
a network in a technical field, for example, a radio access network, a core network, or a transmission network;
a network of a specific standard, for example, a global system for mobile communications (global system for mobile communications, GSM) network, an LTE network, or a 5G network;
a network provided by a vendor, for example, a network provided by a vendor X; or
a network in a geographical area, for example, a network of a factory A or a network of a city B.

It may be understood that, in implementation, the domain management function unit may be implemented by one management platform and a plurality of management applications, where the management applications implement management functions of one or more subnetworks or network elements above. Certainly, a network element in a network may alternatively have a function of the domain management function unit.

### (4) Network element

The network element is an entity that provides a network service, and includes a core network element, a radio access network element, a transmission network element, or the like. For example, the core network element may include but is not limited to an access and mobility management function (access and mobility management function, AMF) entity, a session management function (session management function, SMF) entity, a policy control function (policy control function, PCF) entity, a network data analytics function (network data analytics function, NWDAF) entity, a network repository function (network repository function, NRF), a gateway, and the like.

The radio access network element may include but is not limited to various types of base stations (for example, a next generation NodeB (generation NodeB, gNB), an evolved NodeB (evolved NodeB, eNB), a central unit control plane (central unit control plane, CU-CP), a central unit (central unit, CU), a distributed unit (distributed unit, DU), a central unit user plane (central unit user plane, CU-UP)), and the like.

In addition, a service-oriented management architecture focuses on a management service producer (management service producer, MnS producer) and a management service consumer (management service consumer, MnS consumer). It should be understood that, when a management service is a management service provided by the foregoing service operation unit, the service operation unit is a management service producer, and another service operation unit may be a management service consumer; when a management service is a management service provided by the foregoing cross-domain management function unit, the cross-domain management function unit is a management service producer, and the service operation unit may be a management service consumer; when a management service is a management service provided by the domain management function unit, the domain management function unit is a management service producer, and the cross-domain management function unit or the service operation unit may be a management service consumer; or when a management service is a management service provided by the network element, the network element is a management service producer, and the domain management function unit or the cross-domain management function unit or the service operation unit may be a management service consumer.

In embodiments of this application, autonomous function management may be performed on autonomous networks in different scopes shown in FIG. 1. The autonomous network scopes may include the following three cases:
A single-domain autonomous network includes network elements and a domain management function unit;
a cross-domain autonomous network includes network elements, domain management function units, and a cross-domain management function unit; or
a service autonomous network includes network elements, domain management function units, a cross-domain management function unit, and a service operation unit.

In embodiments of this application, the autonomous network system architecture shown in FIG. 1 may be used as an intent management system architecture. For example, the management service consumer may generate an intent, and the management service producer may execute the intent generated by the management service consumer.

FIG. 2 is a diagram of an intent management logical architecture according to an embodiment of this application. The intent management logical architecture includes an intent monitoring module, an intent execution module, and a logical interface (a logical interface between the intent monitoring module and the intent execution module). The intent monitoring module may be configured to generate an intent, send the intent to the intent execution module, and monitor an intent execution state. The intent execution module may be configured to translate, implement, and evaluate the received intent.

In some implementations, there may be the following several deployment scenarios for intent monitoring modules and intent execution modules in different autonomous networks in FIG. 1.

Scenario 1: For the single-domain autonomous network, the intent execution module may be deployed in the domain management function unit or the network element, and the intent monitoring module may be deployed in the cross-domain management function unit.

Scenario 2: For the cross-domain autonomous network, the intent execution module may be deployed in the cross-domain management function unit, and the intent monitoring module may be deployed in the service operation unit.

Scenario 3: For the service autonomous network, the intent execution module may be deployed in the service operation unit, and the intent monitoring module may be deployed in a third-party system (for example, an enterprise system) outside the autonomous network.

In a service-oriented management architecture, the intent monitoring module is a management service consumer, and the intent execution module is a management service producer. The logical interface is a management and control interface for an intent-based autonomous management function.

The intent execution module may receive one or more intents from the intent monitoring module, and each intent may include one or more intent targets. Due to limited resources of a communication network, a conflict may occur when the intent execution module guarantees a plurality of intents. For example, when a specific number of resources are allocated to an intent 1, resources of an intent 2 are insufficient. In other words, a conflict is likely to occur between the plurality of intents. In addition, one intent may also include a plurality of intent targets. For example, a radio network intent may include a coverage target, a rate target, a capacity target, an energy saving target, and the like. When the intent execution module guarantees an intent target, another intent target may not be fulfilled. In other words, a conflict is also likely to occur between the plurality of intent targets in the intent. Currently, a solution is as follows: When an intent conflict (including a conflict between a plurality of intents and a conflict between a plurality of intent targets of a single intent) exists, the intent execution module needs to suspend execution of a conflicting intent, and the intent execution module needs to notify the intent monitoring module to modify the intent and then re-execute the intent. As a result, the intent cannot be fulfilled in time, affecting operation and maintenance efficiency.

Based on this, embodiments of this application provide an intent management method and an apparatus, to effectively ensure implementation of an intent target and improve operation and maintenance efficiency of a communication network. The following describes in detail the method provided in embodiments of this application with reference to the foregoing descriptions of FIG. 1 and FIG. 2.

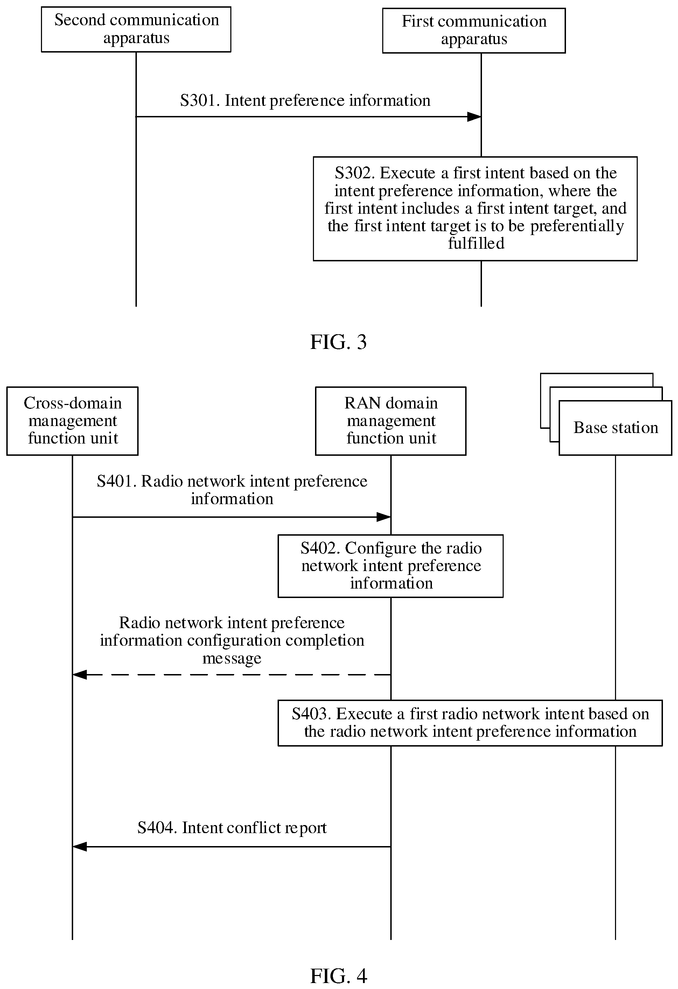

FIG. 3 is a diagram of an intent management method according to an embodiment of this application. The method may be implemented by a first communication apparatus and a second communication apparatus. The first communication apparatus and the second communication apparatus may be the intent execution module and the intent monitoring module shown in FIG. 2. Certainly, the first communication apparatus may alternatively be another device (a functional unit, a management platform, or the like) having a function of the intent execution module, and the second communication apparatus may alternatively be another device (a functional unit, a management platform, or the like) having a function of the intent monitoring module. For example, the first communication apparatus and the second communication apparatus may alternatively be the domain management function unit and the cross-domain management function unit in FIG. 1. The method includes the following steps.

S301. The second communication apparatus sends intent preference information to the first communication apparatus, and correspondingly, the first communication apparatus receives the intent preference information.

In this embodiment of this application, the intent preference information may be used to determine a preferred intent target type, and an intent target associated with the intent target type is to be preferentially fulfilled; and/or the intent preference information may be used to determine a preferred intent object, and an intent target associated with the intent object is to be preferentially fulfilled. In other words, the intent preference information may be used to identify (or distinguish between) an intent target that is to be preferentially fulfilled and an intent target that is not to be preferentially fulfilled.

The intent preference information may also be referred to as intent priority information, intent satisfaction information, or the like. The intent target may be understood as a target expected to be implemented in an intent, and one intent may include one or more intent targets. The intent object (which may also be referred to as an expected object) may be understood as information about an object (for example, a radio network corresponding to a standard or a radio network corresponding to a frequency) to be managed as expected by the intent target. The intent target type may be understood as a type of an intent target, for example, whether the intent target is a coverage target, a rate target, a capacity target, or an energy saving target.

Example 1: For example, the intent is a radio network intent (RadioNetworkIntent) and the intent target is a radio network intent target. The radio network intent target may be a radio network coverage intent target, a radio network rate intent target, a radio network capacity intent target, a radio network energy saving intent target, or the like. The following describes in detail several concepts such as the radio network coverage intent target, the radio network rate intent target, the radio network capacity intent target, and the radio network energy saving intent target.

The radio network coverage intent target may be used to describe an intent target for coverage optimization of a radio network by an operator or the like. An intent object of the radio network coverage optimization intent target may include, for example, a radio network standard (for example, an E-UTRAN or NR), a radio network frequency (for example, 200 MHz or 300 MHz), or a user group. A specific target may be, for example, a weak coverage ratio target (weakRSRPRatioTarget) or a strong coverage ratio target (for example, a ratio of terminal devices in a network whose reference signal received power is higher than a specific power threshold). For example, the radio network coverage intent target may be that a weak coverage ratio of an NR network (intent object) is 20% (target).

The radio network rate intent target may be used to describe an intent target for rate optimization of a radio network by an operator or the like. An intent object of the radio network rate optimization intent target may include, for example, a radio network standard, a radio network frequency, or a user group. A specific target may be, for example, an average downlink rate target (aveDLRANUEthptTarget) or a low downlink rate user ratio target (lowDLRANUEThptRatioTarget). For example, the radio network rate optimization intent target may be that a ratio of users with low downlink rates (for example, users whose downlink transmission rates are less than a downlink transmission rate threshold) in an NR network (intent object) is not greater than 5% (target).

The radio network capacity intent target may be used to describe an intent target for capacity optimization of a radio network by an operator or the like. An intent object of the radio network capacity optimization intent target may include, for example, a radio network standard, a radio network frequency, or a user group. A specific target may be, for example, a high load ratio target (highDlPrbLoadRatioTarget), an uplink load rate target, or a downlink load rate target. For example, the radio network capacity intent target may be that an uplink load rate of an NR network (intent object) is not less than 80% (target).

The radio network energy saving intent target may be used to describe an intent target for energy saving of a radio network by an operator or the like. An intent object of the radio network energy saving intent target may include, for example, a radio network standard, a radio network frequency, or a user group. A specific target may be, for example, an average energy consumption target (rANEnergyConsumptionTarget). For example, the radio network energy saving intent target may be that average energy consumption of an NR network (intent object) in an energy consumption statistics period is not higher than an energy consumption threshold (target).

Example 2: For example, the intent is a radio service intent (RadioServiceIntent), and the intent target is a radio service intent target. The radio service intent target may be a radio service latency intent target, a radio service rate intent target, a radio service capacity intent target, or the like. The following describes in detail several concepts such as the radio service latency intent target, the radio service rate intent target, and the radio service capacity intent target.

The radio service latency intent target may be used to describe an intent target for latency optimization of a radio service by an operator or the like. An intent object of the radio service latency intent target may include, for example, a radio service type (for example, eMBB, URLLC, MIoT, or V2X), a radio service application type (for example, voice or video), a radio service user (for example, a VIP user, a common user, a roaming user, or a high-priority user), and a radio service tenant (for example, a power grid user, a government and enterprise user, a steel mill user, or a vehicle user). A specific target may be, for example, a downlink latency target (dLLatencyTarget) or an uplink latency target (uLLatencyTarget). For example, the radio service latency intent target may be that an average downlink latency of an eMBB service (intent object) is less than a latency threshold (target).

The radio service rate intent target may be used to describe an intent target for rate optimization of a radio service by an operator or the like. An intent object of the radio service rate intent target may include, for example, a radio service type, a radio service application type, a radio service user, and a radio service tenant. A specific target may be, for example, a downlink rate target (dLThptPerUETarget) or an uplink rate target (uLThptPerUETarget). For example, the radio service rate intent target may be that an average downlink transmission rate of an eMBB service (intent object) is not less than a downlink transmission rate threshold (target).

The radio service capacity intent target may be used to describe an intent target for capacity optimization of a radio service by an operator or the like. An intent object of the radio service capacity intent target may include, for example, a radio service type, a radio service application type, a radio service user, and a radio service tenant. A specific target may be, for example, a user number target (UeNumberTarget). For example, the radio service capacity intent target may be that a number of users for an eMBB service (intent object) is not less than a user number threshold.

It may be understood that the foregoing intent is the radio network intent or the radio service intent, and the intent target included in the intent is the radio network intent target or the radio service intent target. This is merely an example of the intent and the intent target. For example, the intent may alternatively be another intent, for example, a vehicle control intent or a factory control intent, and the intent target may alternatively be a vehicle control intent target or a factory control intent target.

In addition, in this embodiment of this application, the second communication apparatus may send the intent preference information to the first communication apparatus, where the intent preference information may include one or more of intent preference information such as radio network intent preference information for configuring a preference for a radio network, or radio service intent preference information for configuring a preference for a radio service. The intent preference information may be used by the first communication apparatus to identify (or area) an intent target that is to be preferentially fulfilled and an intent target that is not to be preferentially fulfilled. That the intent target is to be preferentially fulfilled may mean that the intent target is to be preferentially implemented, the intent target is to be preferentially executed, a resource is to be preferentially allocated to the intent target, or the like.

In a possible implementation, the radio network intent preference information may include one or more of a radio network intent target type preference, a radio network standard preference, a radio frequency preference, a user group preference, or the like.

The radio network intent target type preference is a preference set for a radio network intent target type, and the radio network intent target type may be a latency target, a rate target, a capacity target, an energy saving target, or the like. For example, the radio network intent target type preference may be a preference for a coverage target, a preference for a rate target, a preference for a capacity target, or a preference for an energy saving target.

The radio network standard preference is a preference set for a radio network standard, and the radio network standard may be an E-UTRAN, NR, or the like. For example, the radio network standard preference may be a preference for an E-UTRAN network, or a preference for an NR network.

The radio frequency preference is a preference set for a radio frequency (for example, 200 MHz, 300 MHz, or 700 MHz). For example, the radio frequency preference may be a preference for a network at 200 MHz, or a preference for a network at 700 MHz.

The user group preference is a preference set for a user group (UEGroup). Different user groups may be represented by using different 5G quality of service identifiers (5G QoS identifier, 5QI), single network slice selection assistance information (single network slice selection assistance information, S-NSSAI), or the like. For example, the user group preference may be a preference for a user group with a 5QI of 3, a preference for a user group with S-NSSAI of 10, or a preference for a reduced capability (reduced capability, RedCap) user group.

It may be understood that the radio network intent preference information may alternatively be a combination of a plurality of the radio network intent target type preference, the radio network standard preference, the radio frequency preference, the user group preference, or the like.

In an example, the radio network intent preference information may be a preference set for a combination of a radio network intent target and a network standard, for example, a preference for a rate target in NR or a preference for an energy saving target in an E-UTRAN; or may be a preference set for a combination of a radio network intent target and a frequency, for example, a preference for a rate target at 200 MHz or a preference for a capacity target at 700 MHz.

The radio service intent preference information may include one or more of a radio service intent target type preference, a radio service type preference, a radio service application type preference, a radio service user type preference, a radio service tenant type preference, or the like.

The radio service intent target type preference is a preference set for a radio service intent target type, and the radio service intent target type may be a latency target, a rate target, a capacity target, or the like. For example, the radio service intent target type preference may be a preference for a latency target, a preference for a rate target, or a preference for a capacity target.

The radio service type preference is a preference set for a radio service type, and the radio service type may be eMBB, URLLC, MIoT, V2X, or the like. For example, the radio service type preference may be a preference for an eMBB service or a preference for a URLLC service.

The radio service application type preference is a preference set for a radio service application type, and the radio service application type may be a service application category (for example, voice or video), a service application subcategory (for example, short video, livestreaming, or on-demand), or a specific application name (for example, an application A or an application B). For example, the radio service application type preference may be a preference for a video application, or a preference for livestreaming.

The radio service user type preference is a preference set for a radio service user type, and the radio service user type may be a VIP user, a common user, a roaming user, a high-priority user, or the like. For example, the radio service user type preference may be a preference for a VIP user.

The radio service tenant type preference is a preference set for a radio service tenant type, and the radio service tenant type may be a power grid user, a government and enterprise user, a steel mill user, a vehicle user, or the like. For example, the radio service tenant type preference may be a preference for a government and enterprise user.

It may be understood that the radio service intent preference information may alternatively be a combination of a plurality of the radio service intent target type preference, the radio service type preference, the radio service application type preference, the radio service user type preference, the radio service tenant type preference, or the like.

S302. The first communication apparatus executes a first intent based on the intent preference information, where the first intent includes a first intent target, and the first intent target is to be preferentially fulfilled.

The first intent target is the intent target associated with the intent target type, and/or the first intent target is the intent target associated with the intent object.

In a possible implementation, the intent preference information may be used for intent conflict resolution. For example, an intent conflict exists in the first intent. That the intent conflict exists in the first intent may include that intent targets (for example, the first intent target and a second intent target) included in the first intent conflict with each other, or may be that an intent target (for example, the first intent target) included in the first intent conflicts with an intent target (for example, a third intent target) included in a second intent. It should be understood that two intent targets conflicting with each other may mean that the two intent targets cannot be fulfilled or implemented simultaneously.

In an example, the first intent target is that an average downlink transmission rate of a radio network is not less than a transmission rate threshold 1, and the second intent target is that an energy consumption value of the radio network is not greater than an energy consumption threshold 1. The first communication apparatus cannot control (or manage) the radio network to make the energy consumption value of the radio network not greater than the energy consumption threshold 1 when the average downlink transmission rate of the radio network is not less than the transmission rate threshold 1. Therefore, the first intent target conflicts with the second intent target.

In a case in which the intent conflict exists in the first intent, when executing the first intent, the first communication apparatus may identify (or distinguish), based on the intent preference information, an intent target (for example, the first intent target) that is included in the first intent and that is to be preferentially fulfilled, and preferentially fulfill the intent target.

For example, the intent preference information is a preference for a radio network rate target, the first intent includes the first intent target and the second intent target, the first intent target is that an average downlink transmission rate of a radio network is not less than a transmission rate threshold 1, the second intent target is that an energy consumption value of the radio network is not greater than an energy consumption threshold 1, and the first intent target conflicts with the second intent target. The first intent target is the radio network rate target and is associated with the radio network rate target (that is, a preferred intent target type). The first intent target is an intent target that is to be preferentially fulfilled, and the first communication apparatus may control (or manage) the radio network to fulfill the first intent target. For the second intent target (that the energy consumption value of the radio network is not greater than the energy consumption threshold 1), the first communication apparatus may control (or manage) the radio network to fulfill the second intent target as much as possible (for example, control the radio network to reduce energy consumption as much as possible) while fulfilling (or implementing) the first intent target, or the first communication apparatus may not execute the second intent target.

For example, the intent preference information is a preference for a user group with S-NSSAI of 10, the first intent includes the first intent target, the second intent includes the third intent target, the first intent target is that an average downlink transmission rate of a user group with S-NSSAI of 10 in a radio network is not less than a transmission rate threshold 1, the third intent target is that an average downlink transmission rate of a user group with S-NSSAI of 20 in the radio network is not less than a transmission rate threshold A, and the first intent target conflicts with the third intent target. An intent object of the first intent target is the user group with S-NSSAI of 10 and the first intent target is associated with the user group (that is, a preferred intent object) with S-NSSAI of 10. The first intent target is an intent target that is to be preferentially fulfilled, and the first communication apparatus may control (or manage) the radio network to fulfill the first intent target. For the third intent target, the first communication apparatus may control (or manage) the radio network to fulfill the third intent target as much as possible (for example, control the radio network to increase the average downlink transmission rate of the user group with S-NSSAI of 20 as much as possible) while fulfilling the first intent target, or the first communication apparatus may not execute the third intent target.

In some embodiments, the first communication apparatus may further send condition information to the second communication apparatus, where the condition information may indicate an application condition of the intent preference information, for example, one or more of a time range or an area to which the intent preference information is applicable.

It may be understood that the first communication apparatus may send a plurality of pieces of intent preference information to the second communication apparatus, different intent preference information may have different application conditions, and the intent preference information is available only in a corresponding application condition. The second communication apparatus may be configured to resolve an intent conflict only based on intent preference information that meets an application condition.

In an example, a time range to which intent preference information 1 (that is, a preference for a radio network rate target) is applicable is 8:00 to 12:00, and a time range to which intent preference information 2 (that is, a preference for a radio network energy saving target) is applicable is 15:00 to 18:00. If the first communication apparatus receives the first intent at 9:00, it is determined that the intent conflict exists in the first intent, and the first communication apparatus executes the first intent based on intent preference information A.

In addition, the intent preference information may be applicable to all or some intents managed by the first communication apparatus, or may be applicable to a specific intent managed by the first communication apparatus.

In an example, the first communication apparatus may include at least one intent execution management function (IntentHandlingFunction) object. Different intent execution management function objects may be responsible for managing different intents, for example, managing intents of different areas or intents of different types. When the intent preference information is applicable to all or some intents managed by the first communication apparatus, the second communication apparatus may send (one or more) intent execution management function object identifiers to the first communication apparatus, and the first communication apparatus may configure the intent preference information only in an intent execution management function object identified by the intent execution management function object identifier. In other words, the intent preference information is applicable only to an intent managed by the intent execution management function object identified by the intent execution management function object identifier.

In another example, when the intent preference information is applicable to a specific intent (for example, the first intent) managed by the first communication apparatus, the second communication apparatus may further send an intent identifier of the intent to the first communication apparatus, and the first communication apparatus may configure the intent preference information in an intent management object created for the intent, where the intent management object is used to manage the intent. In other words, the intent preference information is applicable only to the intent.

In some embodiments, for the executed first intent, when the intent conflict exists in the first intent, the first communication apparatus may further send an intent conflict report to the second communication apparatus, where the intent conflict report may include a modification recommendation for an intent target that fails to be fulfilled. The modification recommendation may be a target value modification type (for example, enlarge (enlarge) or decrease (decrease)), a target recommended value, or the like of the intent target.

In an example, the first intent includes the first intent target (for example, an average downlink transmission rate of a radio network is not less than a transmission rate threshold 1) and the second intent target (that an energy consumption value of the radio network is not greater than an energy consumption threshold 1), and the first intent target conflicts with the second intent target. The first intent target is an intent target that is to be preferentially fulfilled and that is determined based on the intent preference information. The first communication apparatus may fulfill the first intent target, and send an intent conflict report to the second communication apparatus. The intent conflict report includes an identifier of the first intent, a second intent target name, a target value modification type (for example, enlarge or decrease) or a target recommended value of the second intent target, and the like, and is used to provide a modification recommendation for the second intent target to the second communication apparatus.

It may be understood that in this embodiment of this application, that the intent preference information is used for intent conflict resolution is only a usage scenario of the intent preference information, and the intent preference information may be further applicable to an intent exploration scenario, an intent execution scenario, and the like.

In an example, when the second communication apparatus requests the first communication apparatus to explore a target value of a radio network energy saving intent (including a radio network energy saving target and a radio network rate target), the first communication apparatus may select a target value combination from a plurality of candidate target value combinations of the radio network energy saving intent target and the radio network rate intent target based on set radio network intent preference information, and send the target value combination to the second communication apparatus. For example, the radio network intent preference information is a preference for a rate target, and the first communication apparatus may select a target value combination with a larger radio network rate intent target value from the plurality of candidate target value combinations of the radio network energy saving intent target and the radio network rate intent target.

Alternatively, in a radio network intent execution phase, when executing a radio network energy saving intent, the first communication apparatus can fulfill both a radio network energy saving target and a radio network rate target. When specified radio network intent preference information is a preference for an energy saving target, the first communication apparatus may guarantee the radio network energy saving target as much as possible (for example, reduce an energy consumption value as much as possible).

An example in which the first intent is a radio network intent, the intent preference information is radio network intent preference information, the radio network is a RAN network, the first communication apparatus is a RAN domain management function unit, and the second communication apparatus is a cross-domain management function unit is used below, to describe in detail the foregoing intent management method shown in FIG. 3 with reference to an example shown in FIG. 4.

Refer to a process of an intent management method shown in FIG. 4. The method includes the following steps.

S401. A cross-domain management function unit sends radio network intent preference information to a RAN domain management function unit, and correspondingly, the RAN domain management function unit receives the radio network intent preference information.

In an example, the radio network intent preference information includes one or more of a radio network intent target type preference, a radio network standard preference, a radio frequency preference, a user group preference, or the like.

In some embodiments, the cross-domain management function unit may further send condition information to the RAN domain management function unit, where the condition information may indicate an application condition of the radio network intent preference information, for example, one or more of a time range and area information to which the radio network intent preference information is applicable.

In addition, it may be understood that the radio network intent preference information may be applicable to all or some radio network intents managed by the RAN domain management function unit, or may be applicable to a specific radio network intent managed by the RAN domain management function unit.

Manner A1: For example, the radio network intent preference information may be applicable to all or some radio network intents managed by the RAN domain management function unit. The RAN domain management function unit may include at least one intent execution management function object. Different intent execution management function objects may be responsible for managing different intents, for example, managing intents of different areas or intents of different types. The cross-domain management function unit may further send an intent execution management function object identifier to the RAN domain management function unit, where the identifier indicates an intent execution management function object configured with the radio network intent preference information. In other words, the radio network intent preference information is applicable only to a radio network intent managed by the intent execution management function object identified by the intent execution management function object identifier.

Manner A2: For example, the radio network intent preference information is applicable to the specific radio network intent managed by the RAN domain management function unit. The cross-domain management function unit may further send a radio network intent identifier of the specific radio network intent (for example, a first radio network intent) to the RAN domain management function unit, to indicate that the radio network intent preference information is applicable only to the radio network intent.

It may be understood that the radio network intent preference information, the condition information, and the intent execution management function object identifier (or the radio network intent identifier) may be included in one message and sent by using the message; or may be included in a plurality of messages and sent by using the plurality of messages. This is not limited in this application.

As an example in which the radio network intent preference information, the condition information, and the intent execution management function object identifier are included in one message, in the foregoing manner A1, the cross-domain management function unit may send a request message to the RAN domain management function unit, where the request message may include the radio network intent preference information, the condition information (for example, an applicable time range and/or applicable area information), and the intent execution management function object identifier, and may further include one or more of the following information: an applicable intent type (for example, a radio network intent) and a radio network intent preference identifier (which may identify that intent preference information carried in the message is the radio network intent preference information), and is used to request the RAN domain management function unit to configure the radio network intent preference information in the intent execution management function object. Optionally, the request message may be a configuration modification request message for the intent execution management function object, or the like.

In the foregoing manner A2, the cross-domain management function unit may send a request message to the RAN domain management function unit, where the request message may include one or more of the following information: the radio network intent preference information, the condition information (for example, an applicable time range), or the radio network intent identifier, and is used to request the RAN domain management function unit to configure the radio network intent preference information in a specific radio network intent management object. Optionally, the request message may be a request message for creating or modifying a radio network intent management object.

S402. The RAN domain management function unit configures the radio network intent preference information.

In an example, in the foregoing manner A1, the RAN domain management function unit may configure the radio network intent preference information in the intent execution management function object identified by the intent execution management function object identifier. Optionally, an applicable intent type (for example, the radio network intent) of a radio network intent preference and application condition information (for example, the applicable time range and/or applicable area information) of a radio network intent preference may be further configured.

In the foregoing manner A2, the RAN domain management function unit may configure the radio network intent preference information in the radio network intent management object corresponding to the specific radio network intent (for example, a radio network intent identified by the radio network intent identifier). Optionally, the application condition information (for example, the applicable time range) of the radio network intent preference may be further configured.

In a possible implementation, the RAN domain management function unit may further generate policy configuration information of a radio base station based on the radio network intent preference information, for example, a resource usage policy, a handover policy, or a load balancing policy.

In an example, when the radio network intent preference information is a preference for a radio network standard or a radio frequency, the handover policy generated by the RAN domain management function unit may be that a user (for example, a terminal device) is preferentially handed over to a cell corresponding to a preferred radio network standard or radio frequency; or when the radio network intent preference information is a preference for a specific user group, the resource usage policy generated by the RAN domain management function unit may be that more resources are allocated to the user group as much as possible, that is, a radio resource usage ratio of the user group is large.

In a possible implementation, after completing configuration of the radio network intent preference information, the RAN domain management function unit may further send a radio network intent preference information configuration completion message to the cross-domain management function unit, to notify the cross-domain management function unit that configuration of the radio network intent preference information is completed.

S403. The RAN domain management function unit executes the first radio network intent based on the radio network intent preference information.

In a possible implementation, if the RAN domain management function unit detects that a conflict exists in the first radio network intent, the RAN domain management function unit may resolve the intent conflict based on the radio network intent preference information, and continue to execute the conflicting intent.

For example, the intent preference information is a preference for a radio network rate target, the first radio network intent includes a first radio network intent target and a second radio network intent target, the first radio network intent target is that an average downlink transmission rate of a radio network is not less than a transmission rate threshold 1, the second radio network intent target is that an energy consumption value of the radio network is not greater than an energy consumption threshold 1, and the first radio network intent target conflicts with the second radio network intent target. The first radio network intent target is the radio network rate target and is associated with the radio network rate target (that is, a preferred intent target type). The first radio network intent target is an intent target that is to be preferentially fulfilled, and the RAN domain management function unit may control (or manage) the radio network to fulfill the first radio network intent target. For the second radio network intent target (that the energy consumption value of the radio network is not greater than the energy consumption threshold 1), the RAN domain management function unit may control (or manage) the radio network to fulfill the second radio network intent target as much as possible (for example, control the radio network to reduce energy consumption as much as possible) while fulfilling the first radio network intent target, or the RAN domain management function unit may not execute the second radio network intent target.

S404. The RAN domain management function unit sends an intent conflict report to the cross-domain management function unit, and correspondingly, the cross-domain management function unit receives the intent conflict report.

In a case in which an intent conflict exists, the RAN domain management function unit may further send the intent conflict report to the cross-domain management function unit, where the intent conflict report may include a modification recommendation for a radio network intent target that fails to be fulfilled. The modification recommendation may be a target value modification type (for example, enlarge or decrease), a target recommended value, or the like of the radio network intent target.

It may be understood that step S404 may be performed only when the intent conflict exists. If no intent conflict exists, the RAN domain management function unit may not send the intent conflict report to the cross-domain management function unit, that is, step S404 may not be performed.

It may be understood that in this embodiment of this application, that the radio network intent preference information is used for intent conflict resolution is only a usage scenario of the radio network intent preference information, and the radio network intent preference information may be further applicable to a radio network intent exploration scenario, a radio network intent execution scenario, and the like.

In an example, in the radio network intent exploration scenario, for example, when the cross-domain management function unit requests the RAN domain management function unit to explore a target value of a radio network energy saving intent (including a radio network energy saving intent target and a radio network rate intent target), the RAN domain management function unit may select a target value combination from a plurality of candidate target value combinations of the radio network energy saving intent target and the radio network rate intent target based on set radio network intent preference information, and send the target value combination to the cross-domain management function unit. For example, the radio network intent preference information is a preference for a rate target, and the RAN domain management function unit may select a target value combination with a larger radio network rate intent target value from the plurality of candidate target value combinations of the radio network energy saving intent target and the radio network rate intent target.

In the radio network intent execution scenario (or phase), it is assumed that when executing a radio energy saving intent, the RAN domain management function unit can fulfill both a specified radio energy saving intent target and a specified radio network rate intent target. When specified radio network intent preference information is a preference for an energy saving target, the RAN domain management function unit may guarantee the radio network energy saving intent target as much as possible (for example, reduce an energy consumption value as much as possible).

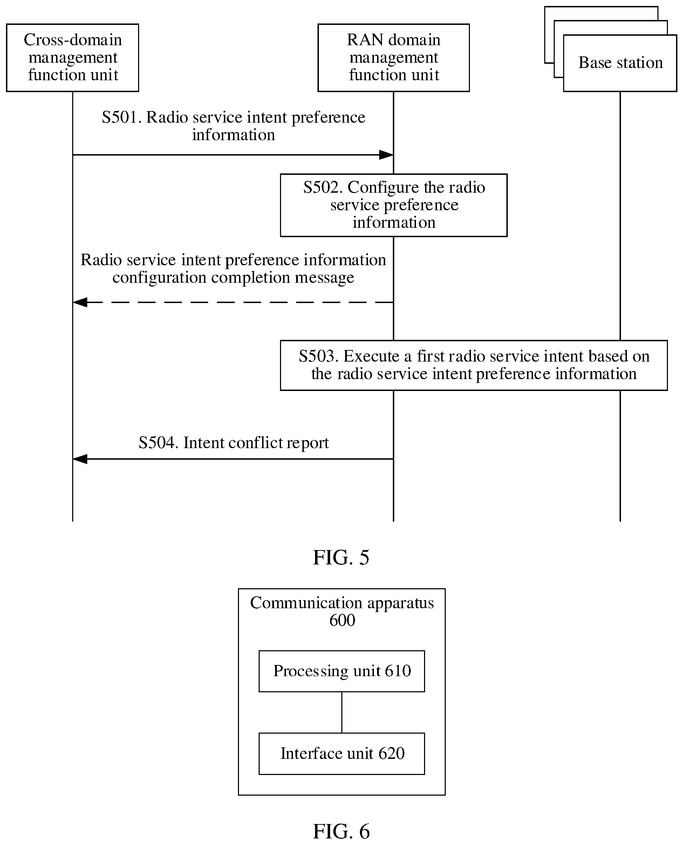

The following uses an example in which the first intent is a radio service intent, the intent preference information is radio service intent preference information, the radio network is a RAN network, the first communication apparatus is a RAN domain management function unit, and the second communication apparatus is a cross-domain management function unit to describe in detail the foregoing intent management method shown in FIG. 3 with reference to an example shown in FIG. 5.

Refer to a process of an intent management method shown in FIG. 5. The method includes the following steps.

S501. A cross-domain management function unit sends radio service intent preference information to a RAN domain management function unit, and correspondingly, the RAN domain management function unit receives the radio service intent preference information.

In an example, the radio service intent preference information includes one or more of a radio service intent target type preference, a radio service type preference, a radio service user type preference, a radio service tenant type preference, or the like.

In some embodiments, the cross-domain management function unit may further send condition information to the RAN domain management function unit, where the condition information may indicate an application condition of the radio service intent preference information, for example, one or more of a time range and area information to which the radio service intent preference information is applicable.

In addition, it may be understood that the radio service intent preference information may be applicable to all or some radio service intents managed by the RAN domain management function unit, or may be applicable to a specific radio service intent managed by the RAN domain management function unit.

Manner B1: For example, the radio service intent preference information may be applicable to all or some radio service intents managed by the RAN domain management function unit. The RAN domain management function unit may include at least one intent execution management function object. Different intent execution management function objects may be responsible for managing different intents, for example, managing intents of different areas or intents of different types. The cross-domain management function unit may further send an intent execution management function object identifier to the RAN domain management function unit, where the identifier indicates an intent execution management function object configured with the radio service intent preference information. In other words, the radio service intent preference information is applicable only to a radio service intent managed by the intent execution management function object identified by the intent execution management function object identifier.

Manner B2: For example, the radio service intent preference information is applicable to the specific radio service intent managed by the RAN domain management function unit. The cross-domain management function unit may further send a radio service intent identifier of the specific radio service intent (for example, a first radio service intent) to the RAN domain management function unit, where the identifier indicates that the radio service intent preference information is applicable only to the radio service intent.

It may be understood that the radio service intent preference information, the condition information, and the intent execution management function object identifier (or the radio service intent identifier) may be included in one message and sent by using the message; or may be included in a plurality of messages and sent by using the plurality of messages. This is not limited in this application.

An example in which the radio service intent preference information, the condition information, and the intent execution management function object identifier are included in one message is used. In the foregoing manner B1, the cross-domain management function unit may send a request message to the RAN domain management function unit, where the request message may include the radio service intent preference information, the condition information (for example, an applicable time range and/or applicable area information), and the intent execution management function object identifier, and may further include one or more of the following information: an applicable intent type (for example, a radio service intent) and a radio service intent preference identifier (which may identify that intent preference information carried in the message is the radio service intent preference information), and is used to request the RAN domain management function unit to configure the radio service intent preference information in the intent execution management function object. Optionally, the request message may be a configuration modification request message for the intent execution management function object, or the like.

In the foregoing manner B2, the cross-domain management function unit may send a request message to the RAN domain management function unit, where the request message may include one or more of the following information: the radio service intent preference information, the condition information (for example, an applicable time range), or the radio service intent identifier, and is used to request the RAN domain management function unit to configure the radio service intent preference information in a specific radio service intent management object. Optionally, the request message may be a request message for creating or modifying a radio service intent management object.

S502. The RAN domain management function unit configures the radio service preference information.

In an example, in the foregoing manner B1, the RAN domain management function unit may configure the radio service intent preference information in the intent execution management function object identified by the intent execution management function object identifier. Optionally, an applicable intent type (for example, the radio service intent) of a radio service intent preference and application condition information (for example, the applicable time range and/or applicable area information) of a radio service intent preference may be further configured.

In the foregoing manner B2, the RAN domain management function unit may configure the radio service intent preference information in the radio service intent management object corresponding to the specific radio service intent (for example, a radio service intent identified by the radio service intent identifier). Optionally, the application condition information (for example, the applicable time range) of the radio service intent preference may be further configured.

In a possible implementation, the RAN domain management function unit further generates policy configuration information of a radio base station based on the radio service intent preference information, for example, a resource usage policy or a resource scheduling policy.

In an example, when the radio service intent preference information is a preference for a radio service type or a radio service application type, the resource usage policy generated by the RAN domain management function unit may be that more resources are allocated as to a user (for example, a terminal device) of a preferred radio service type or radio service application type as much as possible, or a resource requirement of the user of the preferred radio service type or radio service application type is preferentially guaranteed.

In a possible implementation, after completing configuration of the radio service intent preference information, the RAN domain management function unit may further send a radio service intent preference information configuration completion message to the cross-domain management function unit, to notify the cross-domain management function unit that configuration of the radio service intent preference information is completed.

S503. The RAN domain management function unit executes the first radio service intent based on the radio service intent preference information.

In a possible implementation, if the RAN domain management function unit detects that a conflict exists in the first intent, the RAN domain management function unit may resolve the intent conflict based on the radio service intent preference information, and continue to execute the conflicting intent.

For example, the radio service intent preference information is a preference for a VIP user, the first radio service intent includes a first radio service intent target and a second radio service intent target, the first radio service intent target is a rate target of a VIP user, and the second radio service intent target is a rate target of a common user. The first radio service intent target is associated with the VIP user (that is, a preferred intent object). The first radio service intent target is an intent target that is to be preferentially fulfilled, and the RAN domain management function unit may control (or manage) the radio network to fulfill the first radio service intent target. For the second radio service intent target, the RAN domain management function unit may control (or manage) the radio network to fulfill the second radio service intent target as much as possible while fulfilling the first radio service intent target, or the RAN domain management function unit may not execute the second radio service intent target.

For example, the radio service intent preference information is a preference for a live streaming service application type, the first radio service intent includes a first radio service intent target and a second radio service intent target, the first radio service intent target is a rate target of a live streaming service application, and the second radio service intent target is a rate target of a short video service application. The first radio service intent target is associated with the live streaming service application type (that is, a preferred intent object). The first radio service intent target is an intent target that is to be preferentially fulfilled, and the RAN domain management function unit may control (or manage) the radio network to fulfill the first radio service intent target. For the second radio service intent target, the RAN domain management function unit may control (or manage) the radio network to fulfill the second radio service intent target as much as possible while fulfilling the first radio service intent target, or the RAN domain management function unit may not execute the second radio service intent target.

S504. The RAN domain management function unit sends an intent conflict report to the cross-domain management function unit, and correspondingly, the cross-domain management function unit receives the intent conflict report.

In a case in which an intent conflict exists, the RAN domain management function unit may further send the intent conflict report to the cross-domain management function unit, where the intent conflict report may include a modification recommendation for a radio service intent target that fails to be fulfilled. The modification recommendation may be a target value modification type (for example, enlarge or decrease), a target recommended value, or the like of the radio service intent target.

It may be understood that step S504 may be performed only when the intent conflict exists. If no intent conflict exists, the RAN domain management function unit may not send the intent conflict report to the cross-domain management function unit, that is, step S504 may not be performed.

It may be understood that in this embodiment of this application, that the radio service intent preference information is used for intent conflict resolution is only a usage scenario of the radio service intent preference information, and the radio service intent preference information may be further applicable to a radio service intent evaluation scenario, a radio service intent execution scenario, and the like.

In an example, in the radio service intent evaluation scenario (or phase), for example, when the cross-domain management function unit requests the RAN domain management function unit to pre-evaluate a radio service intent (including a radio service latency target and a radio service rate target), the RAN domain management function unit may return, based on set radio service intent preference information, a modification recommendation when one or more radio service intent targets in the radio service intent are not fulfilled.

In the radio service intent execution scenario (or phase), it is assumed that when executing the radio service intent, the RAN domain management function unit can fulfill both a radio service rate intent target of a VIP user and a radio service rate intent target of a common user. When specified radio service intent preference information is a preference for a VIP user, the RAN domain management function unit may guarantee a rate intent target of the VIP user as much as possible (that is, increase a VIP user rate as much as possible).

It may be understood that, to implement functions in the foregoing embodiments, the first communication apparatus and the second communication apparatus include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

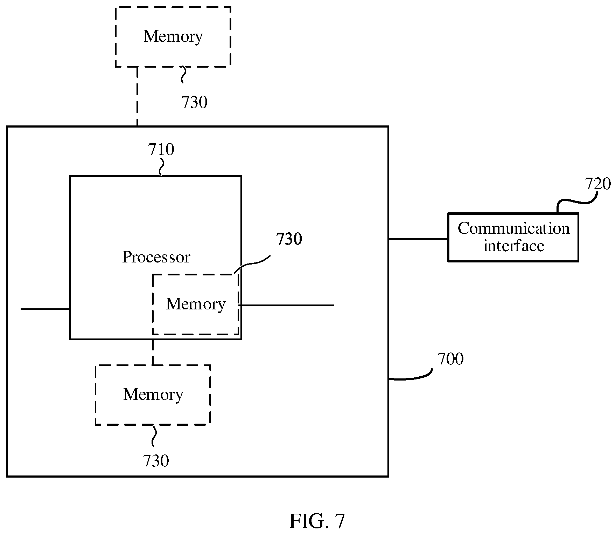

FIG. 6 and FIG. 7 are diagrams of structures of possible communication apparatuses according to embodiments of this application. These communication apparatuses may be configured to implement functions of the first communication apparatus or the second communication apparatus in the foregoing method embodiments, therefore can also achieve beneficial effects of the foregoing method embodiments.

As shown in FIG. 6, a communication apparatus 600 includes a processing unit 610 and an interface unit 620. The processing unit 610 may be a processor or a processing circuit, and the interface unit 620 may further be a transceiver unit or an input/output interface. The communication apparatus 600 may be configured to implement the steps performed by the first communication apparatus or the second communication apparatus in the foregoing embodiments.

When the communication apparatus 600 is configured to implement the steps performed by the first communication apparatus (or the RAN domain management function unit) in the foregoing embodiment,
the interface unit 620 is configured to receive intent preference information from a second communication apparatus, where the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and
the processing unit 610 is configured to execute a first intent based on the intent preference information, where the first intent includes a first intent target, and the first intent target is to be preferentially fulfilled, where the first intent target is the intent target associated with the intent target type, and/or the first intent target is the intent target associated with the intent object.

In a possible design, before executing the first intent based on the intent preference information, the processing unit 610 is further configured to determine that an intent conflict exists in the first intent, where the intent conflict existing in the first intent includes that the first intent target conflicts with a second intent target further included in the first intent, and/or the first intent target conflicts with a third intent target included in a second intent.

In a possible design, the intent preference information includes radio network intent preference information and/or radio service intent preference information, and the first intent is a radio network intent or a radio service intent.

In a possible design, the radio network intent preference information includes one or more of the following: a radio network intent target type preference, a radio network standard preference, a radio frequency preference, or a user group preference.

In a possible design, the radio service intent preference information includes one or more of the following: a radio service intent target type preference, a radio service type preference, a radio service application type preference, a radio service user type preference, or a radio service tenant type preference.

In a possible design, the interface unit 620 is further configured to receive condition information from the second communication apparatus, where the condition information indicates an application condition of the intent preference information, and that the processing unit 610 executes the first intent based on the intent preference information meets the application condition.

In a possible design, the condition information includes a time range to which the intent preference information is applicable.

In a possible design, the interface unit 620 is further configured to receive an intent execution management function object identifier from the second communication apparatus, where the intent execution management function object identifier identifies an intent execution management function object; and the processing unit 610 is further configured to configure the intent preference information in the intent execution management function object.

In a possible design, the first intent is an intent managed by the intent execution management function object.

In a possible design, the intent preference information, the condition information, and the intent execution management function object identifier are included in one message.

In a possible design, the first intent further includes the second intent target, and the second intent target conflicts with the first intent target. The interface unit 620 is further configured to send an intent conflict report to the second communication apparatus, where the intent conflict report includes a modification recommendation for the second intent target.

When the communication apparatus 600 is configured to implement the steps performed by the second communication apparatus (or the cross-domain management function unit) in the foregoing embodiment,
the processing unit 610 is configured to determine intent preference information, where the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and
an interface unit 620 is configured to send the intent preference information to a first communication apparatus.

In a possible design, the intent preference information includes radio network intent preference information and/or radio service intent preference information.

In a possible design, the radio network intent preference information includes one or more of the following: a radio network intent target type preference, a radio network standard preference, a radio frequency preference, or a user group preference.

In a possible design, the radio service intent preference information includes one or more of the following: a radio service intent target type preference, a radio service type preference, a radio service application type preference, a radio service user type preference, or a radio service tenant type preference.

In a possible design, the interface unit 620 is further configured to send condition information to the first communication apparatus, where the condition information indicates an application condition of the intent preference information.

In a possible design, the condition information includes a time range to which the intent preference information is applicable.

In a possible design, the interface unit 620 is further configured to send an intent execution management function object identifier to the first communication apparatus, where the intent execution management function object identifier identifies an intent execution management function object, and the intent preference information is configured in the intent execution management function object.

In a possible design, the intent preference information, the condition information, and the intent execution management function object identifier are included in one message.

In a possible design, the interface unit 620 is further configured to receive an intent conflict report from the first communication apparatus, where the intent conflict report includes a modification recommendation for a second intent target in a first intent, the first intent includes a first intent target and the second intent target, the second intent target conflicts with the first intent target, and the first intent target is to be preferentially fulfilled based on the intent preference information; and the processing unit 610 is further configured to modify the second intent target based on the intent conflict report.

As shown in FIG. 7, this application further provides a communication apparatus 700. The communication apparatus 700 includes a processor 710, and may further include a communication interface 720. The processor 710 and the communication interface 720 are coupled to each other. It may be understood that the communication interface 720 may be a transceiver, an input/output interface, an input interface, an output interface, an interface circuit, or the like. Optionally, the communication apparatus 700 may further include a memory 730, configured to store instructions executed by the processor 710, input data required by the processor 710 to execute the instructions, or data generated after the processor 710 executes the instructions. The memory 730 may be a physically independent unit, or may be coupled to the processor 710, or the processor 710 and the memory 730 are integrated.

When the communication apparatus 700 is configured to implement the steps performed by the first communication apparatus and the second communication apparatus in the foregoing embodiments, the processor 710 may be configured to implement the functions of the processing unit 610, and the communication interface 720 may be configured to implement the functions of the interface unit 620.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disk; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is intended to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An intent management method, comprising:
receiving intent preference information from a second communication apparatus, wherein the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and
executing a first intent based on the intent preference information, wherein the first intent comprises a first intent target, and the first intent target is to be preferentially fulfilled, wherein
the first intent target is the intent target associated with the intent target type, and/or the first intent target is the intent target associated with the intent object.

2. The method according to claim 1, wherein before the executing the first intent based on the intent preference information, the method further comprises:
determining that an intent conflict exists in the first intent, wherein the intent conflict existing in the first intent comprises that the first intent target conflicts with a second intent target further comprised in the first intent, and/or the first intent target conflicts with a third intent target comprised in a second intent.

3. The method according to claim 1 or 2, wherein the intent preference information comprises radio network intent preference information and/or radio service intent preference information, and the first intent is a radio network intent or a radio service intent.

4. The method according to claim 3, wherein the radio network intent preference information comprises one or more of the following:
a radio network intent target type preference, a radio network standard preference, a radio frequency preference, or a user group preference.

5. The method according to claim 3 or 4, wherein the radio service intent preference information comprises one or more of the following:
a radio service intent target type preference, a radio service type preference, a radio service application type preference, a radio service user type preference, or a radio service tenant type preference.

6. The method according to any one of claims 1 to 5, wherein the method further comprises:
receiving condition information from the second communication apparatus, wherein the condition information indicates an application condition of the intent preference information, and the executing the first intent based on the intent preference information meets the application condition.

7. The method according to claim 6, wherein the condition information comprises a time range to which the intent preference information is applicable.

8. The method according to any one of claims 1 to 7, wherein the method further comprises:
receiving an intent execution management function object identifier from the second communication apparatus, wherein the intent execution management function object identifier identifies an intent execution management function object; and
configuring the intent preference information in the intent execution management function object.

9. The method according to claim 8, wherein the first intent is an intent managed by the intent execution management function object.

10. The method according to claim 8 or 9, wherein the intent preference information, the condition information, and the intent execution management function object identifier are comprised in one message.

11. The method according to any one of claims 1 to 10, wherein the first intent further comprises the second intent target, the second intent target conflicts with the first intent target, and the method further comprises:
sending an intent conflict report to the second communication apparatus, wherein the intent conflict report comprises a modification recommendation for the second intent target.

12. An intent management method, comprising:
determining intent preference information, wherein the intent preference information is used to determine a preferred intent target type, and an intent target associated with the intent target type is to be preferentially fulfilled; and/or the intent preference information is used to determine a preferred intent object, and an intent target associated with the intent object is to be preferentially fulfilled; and
sending the intent preference information to a first communication apparatus.

13. The method according to claim 12, wherein the intent preference information comprises radio network intent preference information and/or radio service intent preference information.

14. The method according to claim 13, wherein the radio network intent preference information comprises one or more of the following:
a radio network intent target type preference, a radio network standard preference, a radio frequency preference, or a user group preference.

15. The method according to claim 13 or 14, wherein the radio service intent preference information comprises one or more of the following:
a radio service intent target type preference, a radio service type preference, a radio service application type preference, a radio service user type preference, or a radio service tenant type preference.

16. The method according to any one of claims 12 to 15, wherein the method further comprises:
sending condition information to the first communication apparatus, wherein the condition information indicates an application condition of the intent preference information.

17. The method according to claim 16, wherein the condition information comprises a time range to which the intent preference information is applicable.

18. The method according to any one of claims 12 to 17, wherein the method further comprises:
sending an intent execution management function object identifier to the first communication apparatus, wherein the intent execution management function object identifier identifies an intent execution management function object, and the intent preference information is configured in the intent execution management function object.

19. The method according to claim 18, wherein the intent preference information, the condition information, and the intent execution management function object identifier are comprised in one message.

20. The method according to any one of claims 12 to 19, wherein the method further comprises:
receiving an intent conflict report from the first communication apparatus, wherein the intent conflict report comprises a modification recommendation for a second intent target in a first intent, the first intent comprises a first intent target and the second intent target, the second intent target conflicts with the first intent target, and the first intent target is to be preferentially fulfilled based on the intent preference information; and
modifying the second intent target based on the intent conflict report.

21. A communication apparatus, comprising a unit configured to perform the method according to any one of claims 1 to 11 or the method according to any one of claims 12 to 20.

22. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 11 or the method according to any one of claims 12 to 20 by using a logic circuit or by executing instructions.

23. A computer program product, comprising a computer program or instructions, wherein when the computer program or the instructions are executed by a processor, the method according to any one of claims 1 to 11 or the method according to any one of claims 12 to 20 is implemented.

24. A chip system, wherein the chip system comprises:
a processor and an interface, wherein the processor is configured to invoke instructions from the interface and execute the instructions, and when the processor executes the instructions, the method according to any one of claims 1 to 11 or the method according to any one of claims 12 to 20 is implemented.

25. A computer-readable storage medium, wherein the storage medium stores a computer program or instructions, and when the computer program or the instructions are executed by a processor, the method according to any one of claims 1 to 11 or the method according to any one of claims 12 to 20 is implemented.

26. A communication system, comprising a first communication apparatus and a second communication apparatus, wherein
the first communication apparatus is configured to implement the method according to any one of claims 1 to 11; and
the second communication apparatus is configured to implement the method according to any one of claims 12 to 20.
